# EUROPEAN PATENT SPECIFICATION

(11) **EP 0 423 639 B1**
(45) Date of publication and mention of the grant of the patent: **20.09.1995**
(21) Application number: 90119595.8
(22) Date of filing: 12.10.1990
(51) Int. Cl.: C08J 3/22, C08L 67/04, C08K 5/14

(54) **Peroxide masterbatches using polycaprolactone as the carrier**
Peroxidvormischungen mit Polycaprolactonträger
Mélanges maîtres de peroxydes se servant du polycaprolactone comme résine de véhicule

(30) Priority: 13.10.1989 US 420843
(43) Date of publication of application: 24.04.1991
(73) Proprietor: ELF ATOCHEM NORTH AMERICA, INC., Philadelphia Pennsylvania 19102-3222 (US)
(72) Inventor: Stein, Daryl Lee, Williamsville, New York 14221 (US)
(74) Representative: Abitz, Walter, Dr.-Ing.

(56) References cited:
- EP-A- 0 030 757
- EP-A- 0 227 048
- FR-A- 2 382 995

## Description

### Field of the Invention

This invention relates to a peroxide masterbatch composition. More specifically, this invention relates to a masterbatch composition comprising one or more organic peroxides homogeneously dispersed in polycaprolactone.

### Background of the Invention

Organic peroxides are widely used in the polymer industry to modify various resins such as through grafting reactions, cross-linking reactions, and modification of melt flow, for example. However, by their very nature, peroxides are heat sensitive, degrade quickly and can be dangerous if improperly handled in a concentrated form.

To increase safety and ease of handling, peroxides are often sold as diluted solutions in solvents such as in odorless mineral spirits, or as blends with solid inorganic fillers, such as diatomaceous earth, silica, clays, or calcium carbonate. While these peroxide formulations have their uses, the solvent or filler functions merely to dilute the peroxide. Thus, the solvent and fillers do not enhance the properties of the polymer to be modified by the peroxide formulation.

Another technique for increasing the safety and ease of handling peroxides has been the development of peroxide masterbatches. A masterbatch is a composition in which a compound, such as an organic peroxide, is blended with a carrier, typically a polymer, where the masterbatch polymer is compatible with the polymer or resin to which the masterbatch ultimately will be added (the latter polymer or resin being referred to hereinafter as a "host polymer or resin"). The peroxide or other compound added to the carrier in the masterbatch is present in a concentration considerably higher than the concentration of the compound in the host polymer or resin into which the masterbatch is mixed. The advantages of peroxide masterbatches are that they can be prepared fairly readily, the peroxide is in a fairly stable form, and they are relatively safe and easy to store, ship and handle, particularly since masterbatches typically are formed into pellets or powders for ease of blending with the host polymer or resin to be treated. Furthermore, the masterbatches are formulated by using a polymer in the masterbatch which is identical to or very compatible with the host polymer or resin to be treated to assure good blending and compatibility.

European Patent Application Publication No. 0 227 048 A2, published July 1, 1987, of Albee, Jr., discloses a peroxide masterbatch composition referred to as a peroxide catalyst concentrate. The concentrate is formed by homogeneously blending the peroxide in a polymer composition including at least two thermoplastic or wax polymers in which the combined polymer composition as a melt index of about 250 to about 2500 grams per 10 minutes at 190°C, with an average softening point of about 50° to 115°C, and further in which the melting point range must be broad having at least two melting temperatures at which a substantial portion of the polymer composition melts at each temperature. Polycaprolactone is not one of the polymers mentioned as being suitable for inclusion in the peroxide concentrate composition.

U.S. Patent 3,242,159 of Kaufman discloses a peroxide dispersed into linear polyethylene to form a masterbatch, which in turn is added to more linear polyethylene. The final linear polyethylene is heated to produce a cross-linked polymer. Fillers and additives, except antioxidants, are to be avoided in the cross-linking mixture.

U.S. Patent 3,594,342 of Ratzsch et al. discloses peroxide masterbatches using as carriers copolymers of ethylene and vinyl acetate or ethylene and acrylic esters, with a mean molecular weight of 1200 to 8000. Additives such as dyes, lamp-black and stabilizers may also be included.

U.S. Patent 3,923,947 of Cook discloses a continuous process for preparing cross-linkable polyethylene in an extruder in which a peroxide compound with a flash point of at least 70°C is dispersed or dissolved in a liquid wax or oil compatible with the polyethylene composition. The dispersion or solution of peroxide is injected into molten polyethylene in a mixing zone at the nose end of the extruder. The hold-up time in the mixing zone is controlled to disperse the peroxide compound in the polyethylene melt uniformly and safely without substantial crosslinking.

U.S. Patent 4,006,283 of MacKenzie, Jr. et al. discloses a method of applying liquid di-t-butyl peroxide to a polyolefin by introducing the peroxide in a vessel below a mass of particulate polyolefin. The polyolefin particles may be added in a batch to the vessel and initially treated with the peroxide. This is followed by the prompt addition of another or remaining batch of polyolefin particles and additional curing agent.

U.S. Patent 4,342,844 of Torenbeek et al. describes coating polymer particles, such as polyethylene, with a liquid peroxide medium. The liquid medium comprises about 2-100% of a peroxide which is a liquid at about 15°-95°C and 0 - 98% of a liquid in which the peroxide and the polymer are insoluble. A polymer masterbatch in which essentially all of the polymer particles are completely surrounded by the peroxide liquid medium is obtained.

U.S. Patent 4,397,992 of Johansson et al. discloses a peroxide masterbatch in which the carrier is a multistage graft copolymer comprising 70-90% of a hard portion made by graft polymerizing a monomer or monomers of lower alkyl methacrylates, styrene and mixtures thereof and a cross-linking agent onto 10-30% of a rubbery portion made by polymerizing a butadiene and/or lower alkyl acrylate or a mixture of styrene and butadiene or acrylonitrile and butadiene. Optional reinforcing agents or fillers may be included.

U.S. Patent 4,451,589 of Morman et al. discloses a peroxide masterbatch wherein an organic peroxide is mixed at high temperatures in extruders with carrier polymers and copolymers of propylene and butylene. More than half of the polymer and more than 0.01% of the peroxide remains unreacted after the masterbatch is initially pelletized.

A masterbatch of peroxide dispersed onto a filler is described in a Material Safety Data Sheet covering LUPERCO™ 101-P20 which is produced by the Lucidol Division of the Pennwalt Corp. Basically, this masterbatch consists of 2,5-dimethyl-2,5-di-(t-butylperoxy)hexane, silica, and polypropylene powder.

A masterbatch of peroxide dispersed onto a polymer is also described in a Material Safety Data Sheet covering LUPERCO™ 101-A5, also produced by the Lucidol Division of the Pennwalt Corp. This masterbatch consists of 5% 2,5-dimethyl-2,5-di-(t-butylperoxy)hexane on acetal resin (formaldehyde homopolymer).

Nowhere in the prior art is the use of polycaprolactone as a carrier mentioned or suggested. Nor is it mentioned that the carrier polymer itself can be used to improve upon the properties of the host resin to which the masterbatch is to be added.

### Summary of the Invention

The present invention relates to a masterbatch composition comprising 0.001% to 70% of an organic peroxide homogeneously dispersed in a polycaprolactone carrier.

In addition, the present invention relates to a method of modifying a polymer comprising adding to the polymer 0.1% to 50% of the foregoing peroxide-polycaprolactone masterbatch composition.

### Definitions

As used herein with respect to the masterbatch in relation to the host polymer or resin, "compatible" means that the masterbatch is readily dispersed into the host polymer or resin into which the masterbatch is to be added with no obvious "sweat-out" or substantial deterioration in physical properties of the masterbatch or host polymer combined with the masterbatch. As used herein with respect to the components of the masterbatch itself, "compatible" means that the component is readily dispersible within the polycaprolactone or the other components of the masterbatch without "sweating out" or "oiling out" and without substantially adversely affecting the physical or chemical properties of the masterbatch.

As used herein, the term "percent" or "%" means by weight of the masterbatch composition unless otherwise indicated by the context in which the term is used.

As used herein, "substantial degradation" with respect to the effect of additives to the masterbatch means that greater than 25% of the peroxide component in the masterbatch would be degraded.

### Detailed Description of the Preferred Embodiment

As stated above, this invention concerns a composition of organic peroxide masterbatches in which polycaprolactone is the carrier. In accordance with the present invention, not only are the advantages of a peroxide masterbatch obtained with respect to the convenient and safe handling and processing of peroxide compounds, but also, the use of polycaprolactone as a carrier provides additional advantages not recognized by the prior art.

Polycaprolactone has uses as described in D.R. Paul and Newman, Eds., Polymer Blends, Vol. 2, 369-389, Academic Press, 1978. Polycaprolactone is a partially crystalline polymer with a melting point of 60° C. This relatively low melting point is an important consideration when trying to compound into it heat sensitive peroxides. Polycaprolactone is nonvolatile so as not to be lost either during polymer processing or end use. Its most important physical property is its compatability with a wide variety of polymers, which means polycaprolactone serves as a polymeric plasticizer for many of them. It has also been used to improve dyeability, stress crack resistance, and static charge resistance of many polymers. When combined with natural and synthetic rubbers which were then cross-linked, polycaprolactone blends with improved processability, additive acceptance and strength have been obtained. Thus, polycaprolactone in its own right can improve upon many physical properties of the polymers into which it is blended.

Based on the present invention, a masterbatch of an organic peroxide and polycaprolactone (and other optional additives) can be used to modify physical properties of a host resin into which the masterbatch has been added. Thus, the peroxide is in a safe, convenient form and both the peroxide and the polycaprolactone carrier can modify the host resin advantageously.

The peroxide-polycaprolactone masterbatch optionally may contain various other additives typically used with polymer systems. While these will be described in more detail hereinafter, such optional additives generally include inorganic fillers, antioxidants, antiozonants, antistatic agents, dyes, pigments, fire retardants, fluorescent brighteners, light stabilizers, cross-linking enhancers, and mixtures thereof.

It is also optional that two or more different kinds of organic peroxides with different decomposition temperatures may be present in the masterbatch. The advantage of having masterbatches containing peroxides with different decomposition temperatures is that the masterbatches could be used for sequential grafting, cross-linking, or other polymer modification reactions.

Organic peroxides suitable for use in the peroxide-polycaprolactone masterbatch composition of the present invention are any organic peroxides which can be used in grafting reactions, cross-linking reactions or modification of melt flow of various polymers comprising the host resins with which the masterbatch will be blended. Any organic peroxide that can be mixed with polycaprolactone without substantial degradation may be used.

In order to have a masterbatch that does not require refrigerated storage, it is preferred to use solid peroxides which have a melting point greater than 30°C and a ten hour half life temperature greater than 45°C, and liquid peroxides which have a freezing point less than 30°C and a ten hour half life temperature greater than 75°C. It is presently more preferred to use solid peroxides which have a melting point greater than 35°C and a ten hour half life temperature greater than 49°C, and liquid peroxides which have a freezing point less than 35°C and a ten hour half life temperature greater than 90°C. If solid (or liquid) peroxides are used which have a melting (or freezing) point and a ten hour half life temperature that are less than the preferred range, then refrigerated storage of the masterbatch will be required.

In the book Chemical Additives for the Plastics Industry Properties, Applications, Toxicologies, by Radian Corporation, Noyes Data Corporation Publisher (1987), herein referred to as "Chemical Additives," many organic peroxides are described on pages 279-284, which meet these thermal stability requirements. Some of the preferred peroxides mentioned are, by way of example and not limitation, alpha,alpha′-bis-(t-butylperoxy)diisopropylbenzene, t-butyl cumyl peroxide, dicumyl peroxide, 2,5-dimethyl-2,5-bis-(t-butylperoxy)hexane, 2,5-dimethyl-2,5-bis-(t-butylperoxy)hexyne-3, di-t-butyl peroxide, benzoyl peroxide, OO-t-butyl-O-isopropyl monoperoxycarbonate, OO-t-butyl-O-(2-ethylhexyl) monoperoxycarbonate, t-butyl peroxyacetate, t-butyl peroxybenzoate, di-t-butyl diperoxyphthalate, di-t-butyl peroxyazelate, t-butylperoxy-2-ethylhexanoate, t-butyl peroxyisobutyrate, n-butyl-4,4-di-(t-butylperoxy)valerate, succinic acid peroxide, t-butylperoxy maleic acid, 1,1-di-(t-butylperoxy)cyclohexane, 1,1-di-(t-butylperoxy)-3,3,5-trimethylcyclohexane, 2,2-di-(t-butylperoxy)butane, ethyl 3,3-di-(t-butylperoxy)butyrate, t-amyl perbenzoate, t-amyl peroxy(2-ethylhexanoate), and 1,1-di-(t-amylperoxy)cyclohexane.

Other peroxides that are not mentioned in the reference but which may be used in this invention are, for example, 2-(t-butylperoxy)-2-methyl-4-hydroxypentane, di-[2-(t-butylperoxy)-2-methyl-4-pentyl] carbonate, di-[2-(t-butylperoxy)-2-methyl-4-pentyl] terephthalate, di-[2-(t-butylperoxy)-2-methyl-4-pentyl] isophthalate, 4-hydroxy-2-methyl-2-pentyl peroxy-2-methylbenzoate, 4-hydroxy-2-methyl-2-pentyl peroxyacetate, di-t-amylperoxide, 2,2-di-(t-amylperoxy)propane, ethyl 3,3-di-(t-amylperoxy)butyrate, 2,5-dimethyl-2,5-di-(t-amylperoxy)hexane, and OO-t-amyl-O-(2-ethylhexyl)monoperoxycarbonate.

The peroxides may be present in the masterbatch in an amount of 0.001% to 70%. Preferably, the peroxide or combination of peroxides are present in the masterbatch in an amount of 1.0% to 50%. The amount of peroxide contained in the masterbatch is dependent upon the ultimate use intended for the masterbatch, including the type of peroxide used, the type and intended use of the host polymer or resin into which the masterbatch is incorporated, and other factors well known to those skilled in the art. Generally, it is preferred that if optional additives are included in the masterbatch along with the peroxide or peroxides and the polycaprolactone, the total peroxide and additive components not exceed 95%, and, preferably, 85% of the weight of the masterbatch composition.

The molecular weight of the polycaprolactone may be any value between 500 and 100,000, and preferably is between 10,000 and 50,000. Examples of commercial grades of polycaprolactone are TONE™ 300 (M.W. ca. 15,000) and TONE™ 700 (M.W. ca. 40,000) which are produced by the Union Carbide Corp.

Other optional additives that may be added either individually or in any combination to the peroxide-polycaprolactone masterbatch are the following types of typical additives to polymer systems:
(a) Inorganic Fillers. Non-limiting examples of fillers are described in Chemical Additives, pp. 256-261. Some preferred examples are diatomaceous earth, kaolin clay, calcium carbonate, glass fibers, magnesium oxide, silica, talc, and zinc oxide.
(b) Antioxidants and Antiozonants. Non-limiting examples are described in Chemical Additives, pp. 153-163. Preferred antioxidants are hindered phenols, organosulfur compounds, organophosphorous compounds, and aromatic amines. Some preferred examples are butylated hydroxytoluene, hexamethylenebis(3,5-di-t-butyl-4-hydroxycinnamate), 4-octadecyl 3,5-di-t-butyl-4-hydroxyhydrocinnamate, tetrakis[methylene(3,5-di-t-butyl-4-hydroxyhydrocinnamate)]methane, tris(2,4-di-t-butylphenyl)phosphite, and dilauryl thiodipropionate. Other preferred sulfur based antioxidants that are not listed in the reference are disclosed in U.S. Patents 3,772,246 and 3,652,680.
(c) Antistatic Agents. Non-limiting examples are described in Chemical Additives, pp. 164-174. Preferred antistatic agents are aliphatic amines, quaternary ammonium compounds, organophosphates, and polyethers. Examples of preferred antistatic agents are 2,2,-(octadecylimino)bisethanol, alpha-dodecyl-omega-hydroxy-poly(oxy-1,2-ethanediyl)phosphate, polyethyleneglycol monodecyl ether, and (3-lauramidopropyl)trimethylammoniummethyl sulfate.
(d) Pigments, Dyes, and Optical Brighteners. Non-limiting examples are described in Chemical Additives, pp. 194-223. Examples of preferred dyes, pigments, and optical brighteners are titanium dioxide, zinc oxide, zinc sulfide, and carbon black.
(e) Heat Stabilizers. Non-limiting examples are described in Chemical Additives, pp. 290-342. Examples of preferred heat stabilizers are magnesium stearate, calcium stearate, di-n-octyltin S,S-bis(isooctyl mercaptoacetate), di-n-octyltin bis(2-ethylhexyl maleate), dibasic lead phosphate, and lead salicylate.
(f) Ultraviolet Stabilizers. Non-limiting examples are described in Chemical Additives, pp. 440-446. Preferred ultraviolet stablizers are 2-hydroxybenzophenones, 2-(2-hydroxyphenyl)benzotriazoles, cyanoacrylates, organonickel compounds, benzylidene malonates, oxalanilides, phenyl salcilates, and hindered amines. Examples of preferred ultraviolet stabilizers are 2-hydroxy-4-n-octyloxybenzophenone, 2-(2′-hydroxy-5′-methylphenyl)benzotriazole, 2-(2′-hydroxy-5′-t-octylphenyl)benzotriazole, ethyl 2-cyano-3,3-diphenylacrylate, nickel dibutyldithiocarbamate, dimethyl-2-(4-methoxybenzylidene)malonate, 2-ethyl-2′ethoxy-oxalanilide, and bis-(2,2,6,6-tetramethyl-4-piperdinyl)sebacate.
(g) Fire Retardants. Non-limiting examples are described in Chemical Additives, pp. 268-278. Preferred fire retardants are inorganic compounds, halogenated organic compounds, and phosphorous compounds. Examples of preferred fire retardants are alumina trihydrate, antimony trioxide, decabromodiphenyl ether, hexabromocyclodecane, and triisopropyl phenyl phosphate. An additional preferred fire retardant is di-(2-ethylhexyl)-3,4,5,6-tetrabromophthalate.
(h) Cross-linking enhancer co-agents (compounds which enhance the cross-linking effectiveness of a peroxide). Non-limiting examples of preferred co-agents are triallyl isocyanurate, triallylcyanurate, triallyl trimellitate, diallyl phthalate, diallyl carbonate, diallyl oxalate, bis(2-methacryloxyethyl) terephthalate, and 1,4-butylene glycol diacrylate.

It should be noted that the invention is not limited to the examples given in the above references, but it is to include all peroxides and polymer additives known in the art, provided that it must be possible to mix the peroxide and additive into polycaprolactone without substantial degradation, and that the peroxide and additives show reasonable compatibility with polycaprolactone in the desired composition range.

The amount of the optional additives to be included in the masterbatch compositions of the present invention are well known to those skilled in the art and may be easily determined without undue experimentation, depending on the type of additive, the nature and purpose of the additive and the type and purpose of the host polymer resin into which the masterbatch is to be blended. Typically, the amount of optional additives that may be blended into the masterbatch may be in any ratio and in any amount between 0.1% and 90%, so long as the total amount of peroxide plus optional additives does not exceed 95%. More preferably, the amount of optional additives may be any amount between 0.1% and 80%, so long as the total amount of peroxide plus optional additives does not exceed 85%.

The peroxide and any optional additives may be homogeneously dispersed in or blended with the polycaprolactone using any method known in the art that is used to mix a compound into a polymer. Examples of such methods are:
(1) melt the polycaprolactone, add the peroxide, stir and cool;
(2) add the polycaprolactone and peroxide to a melt mixer, such as a Brabender;
(3) mix the polycaprolactone and peroxide on a roll mill;
(4) dissolve the polycaprolactone and peroxide into a solvent and then, optionally, to remove the solvent;
(5) mix the polycaprolactone and peroxide together using an extruder; and
(6) dry blend polycaprolactone powder or granules with a peroxide.

The temperatures used to carry out the mixing may be any temperatures between about 0°C and about 150°C, preferably between about 20°C and about 100°C. The temperature of mixing depends upon the thermal stability of the peroxide or peroxides to be blended into the masterbatch, and the temperature of mixing should be such that substantial degradation of the peroxide does not occur.

The final form of the masterbatch depends upon the combination of materials used and the needs of the end user. The final form may be a liquid or solid, and if a solid, usually in the form of flakes, granules, pellets, or powder.

The polymers of a host resin which the masterbatch may be used to modify in some desirable way are those polymers which display compatibility with polycaprolactone. A non-limiting list of such polymers includes, for example, polyethylene, polypropylene, poly(vinyl chloride), poly(vinyl chloride-co-vinylidene chloride), acrylonitrile-butadiene-styrene copolymers (ABS), poly(vinyl acetate), nitrocellulose, poly(styrene-co-acrylonitrile), poly(vinyl butyral), poly(vinyl formal), poly(styrene-co-methyl methacrylate), cellulose tridecanoate, poly(ethylene oxide), polycaprolactam, poly(ethyl vinyl ether-co-maleic anhydride), polybutadiene, polyisobutylene, natural gum rubber, poly(styrene-co-butadiene), poly(ethylene-co-propylene) terpolymer, butyl rubber gum, styrene unsaturated polyesters, poly(ethyl vinyl ether), epoxy resins, and phenol formaldehyde polymers.

The masterbatch may be used in any amount between 0.1% and 50% in the host resin. Where the host resin is polycaprolactam, the masterbatch should be used in an amount not exceeding 10%.

In order to further illustrate the invention, experiments set forth in the following examples were carried out. However, the examples are not meant to limit the scope of the invention in any way.

### Example 1

### Preparation of Peroxide-Polycaprolactone Masterbatches

A three necked flask was fitted with a nitrogen inlet line, a mechanical stirrer, and a thermometer. The flask was charged with 40.0g of TONE™ 300 (polycaprolactone, M.W. 15,000, from Union Carbide Corp.) and the flask was purged with nitrogen. The polymer was melted by heating the flask in a 90°C oil bath. Once all the polymer had melted, a measured amount of a peroxide was added as indicated in Table 1. The mixture was then vigorously stirred for five minutes with the melt temperature being held between 75-80°C. The molten polymer mixture was poured into a bottle, and after cooling, a white waxy solid was obtained. Peroxide-polycaprolactone masterbatches prepared in this manner have the peroxide type and content set forth in Table 1.

**Table 1**

| **Peroxide-Polycaprolactone Masterbatches Using Various Peroxides** | | |
|---|---|---|
| Peroxide | Amount Added (grams) | Weight % Expected |
| 1. LUPERSOL™ 101¹ | 5.5 | 10.9⁴ |
| 2. LUPEROX™ 500R² | 10.0 | 20.0 |
| 3. LUPERSOL™ 231³ | 11.0 | 20.2⁵ |

| | | |
|---|---|---|
| ¹ 90.3% 2,5-dimethyl-2,5-di-(t-butylperoxy)hexane produced by the Lucidol Division of Pennwalt Corp. | | |
| ² 99% dicumyl peroxide produced by the Lucidol Division of Pennwalt Corp. | | |
| ³ 92% 1,1-di(t-butylperoxy)-3,5,5-trimethylcyclohexane produced by the Lucidol Division of Pennwalt Corp. | | |
| ⁴ found 10.6% peroxide. | | |
| ⁵ found 20.7% peroxide. | | |

The above results demonstrate that organic peroxides can be blended into molten polycaprolactone without substantial peroxide decomposition.

### Example 2

### Preparation of Peroxide-Polycaprolactone Masterbatch with Antioxidant Additives

A three necked flask was fitted with a nitrogen inlet line, a mechanical stirrer, and a thermometer. The flask was charged with 112.5g of TONE™ 300, 2.25g of Irganox™ 1010 (tetrakis[methylene(3,5-di-t-butyl-4-hydroxyhydrocinnamate)]methane antioxidant from Ciba-Geigy), and Irgafos™ 168 (tris(2,4-di-t-butylphenyl)phosphite antioxidant from Ciba-Geigy). The flask was purged with nitrogen and was heated in an oil bath until the melt temperature of the polymer reached 80-90°C. Then 1.0g of 90.3% LUPERSOL™ 101 was added, and the stirring was continued for another 2-3 minutes. The molten polymer was then poured into a bottle and allowed to cool to room temperature to form a white solid. Later the solid was broken up into small granules using a mortar and pestle. Analysis of the composition by gas chromatography showed that it contained 0.6% LUPERSOL™ 101, whereas 0.76% was the expected value by calculation. The above results show that it is possible to prepare a peroxide-polycaprolactone masterbatch which also contains antioxidants without substantial degradation.

### Example 3

### Preparation of a Peroxide-Polycaprolactone Masterbatch With Antioxidants and Hindered Amine Light Stabilizer Additives

The procedure was carried out as described in Example 2 except that 6.75g of Tinuvin™ 770 (bis-(2,2,6,6-tetramethyl-4-piperidinyl)sebacate light stabilizer from Ciba-Geigy) was also added. Analysis of the composition by gas chromatography indicated that it contained 0.7% LUPERSOL™ 101 whereas 0.73% was expected by calculation. The above results show that it is possible to prepare a peroxide-polycaprolactone masterbatch which contains antioxidants and a UV light stabilizer without substantial degradation.

### Example 4

### Modification of Polypropylene With Masterbatches Containing Peroxide or Polycaprolactone

To a Brabender mixer set at 190°C and 30 rpm was added the amount of polypropylene (grade 6501 from Himont) indicated in Tables 2 and 3. When the resin temperature reached 180°C, the appropriate amount of masterbatch indicated in Tables 2 and 3 was added in one portion, and the blending continued for 5-6 minutes. The resin was removed, cooled to room temperature, and ground in a laboratory grinder. The melt flow of the ground samples was measured with a Tilnius Olsen Extrusion Plastometer (ASTM 1238, Condition L). The results are set forth in Tables 2 & 3.

### Comparative Example A

### Preparation of a Polycaprolactone Antioxidant Masterbatch

The procedure was carried out as described in Example 2 except that no peroxide was added. This example is for comparative purposes and is not part of the invention.

### Comparative Example B

### Modification of Polypropylene Using a Polypropylene-Peroxide Masterbatch

A dry blend of polypropylene and antioxidants indicated in Tables 2 and 3 were mixed in the Brabender mixer and heated to 180°C as described in Example 4. A polypropylene-peroxide masterbatch was prepared by mixing with a spatula at room temperature the appropriate amount of peroxide into a 20g portion of fresh polypropylene powder. This masterbatch was added to the fluxing resin in the Brabender mixer in one portion. After being mixed for 5-6 minutes, the resin was removed from the mixer, and the samples were prepared as described in Example 4. The results are set forth in Tables 2 & 3.

### Comparative Example C

### Compounding of Antioxidants Only into Polypropylene

The amount of antioxidants indicated in Tables 2 and 3 were dry blended into polypropylene powder, which was then added to the Brabender mixer as described in Example 4. Test specimens were also prepared as described in Example 4, and the results are set forth in Tables 2 & 3.

**Table 2**

| **Modification of Polypropylene With and Without Masterbatches Containing Peroxides or Polycaprolactone** | | | | | | |
|---|---|---|---|---|---|---|
| Masterbatch (grams) | PP¹ (grams) | PCL² (wt%) | Peroxide³ (wt%) | AO-1⁴ (wt%) | AO-2⁵ (wt%) | HALS⁶ (wt%) |
| Ex. 2 (11.8) | 213.2 | 5.0 | 0.04 | 0.1 | 0.1 | -- |
| Ex. 3 (12.5) | 212.5 | 5.0 | 0.04 | 0.1 | 0.1 | 0.3 |
| Comp. Ex. A (11.7) | 213.3 | 5.0 | -- | 0.1 | 0.1 | -- |
| Comp. Ex. B | 224.4 | -- | 0.04 | 0.1 | 0.1 | -- |
| Comp. Ex. C | 224.5 | -- | -- | 0.1 | 0.1 | -- |

| | | | | | | |
|---|---|---|---|---|---|---|
| ¹ Total amount of polypropylene added to the mixer in one run. | | | | | | |
| ² Total amount of polycaprolactone added from the masterbatch. | | | | | | |
| ³ Total amount of LUPERSOL™ 101 added, either from the masterbatch or directly. | | | | | | |
| ⁴ Total amount of Irganox™ 1010 added, either from the masterbatch or directly. | | | | | | |
| ⁵ Total amount of Irgafox™ 168 added, either from the masterbatch or directly. | | | | | | |
| ⁶ Total amount of Tinuvin™ 770 added from the masterbatch. | | | | | | |

**Table 3**

| **Test Results for the Modified Polypropylene Samples With and Without Masterbatches** | |
|---|---|
| Masterbatch or Control Used | Melt Flow (g/10 min) |
| Example 2 | 20.5 |
| Example 3 | 25.3 |
| Comp. Ex. A | 5.2 |
| Comp. Ex. B | 9.1 |
| Comp. Ex. C | 3.3 |

As the data in the examples and the tables clearly show, a peroxide-polycaprolactone masterbatch when used to modify polypropylene leads to a material with an improved melt flow (Examples 2 and 3) when compared with samples that were not modified using a peroxide-polycaprolactone masterbatch (Comparative Examples A, B and C). Moreover, there appears to be a synergistic effect when a hindered amine is added to the masterbatch, as can be seen from the polypropylene sample modified using the masterbatch of Example 3, which showed the highest melt flow of all the samples.

### Example 5

### Addition of Peroxide-Polycaprolactone Masterbatch to Polypropylene Powder

A suitable container was charged with 213.2g of polypropylene powder (grade 6501 from Himont) and 11.8g of the masterbatch formulation of Example 2, which had been ground to a powder and sieved through a 16 mesh screen. The mixture was added to plastic container which then was sealed and vigorously shaken to thoroughly mix the components of the masterbatch. Based on the weights of the ingredients, the mixture contained 5% polycaprolactone, 0.04% LUPERSOL™ 101, and 0.1% each of Irganox™ 1010 and Irgafos™ 168.

### Example 6

### Addition of Peroxide-Polycaprolactone Masterbatch to Polypropylene Powder

A sample of 212.5g of polypropylene and 12.5g of the masterbatch of Example 3 were dry blended as described in Example 5. In addition to the ingredients of Example 5, this sample also contained 0.3% Tinuvin™ 770.

### Comparative Example D

### Addition of Antioxidants and Peroxide to Polypropylene Powder

To a sample of 224.45g of polypropylene powder (grade 6501 from Himont) were added 0.225g (0.1%) of Irganox™ 1010, 0.225g (0.1%) of Irgafos™ 168, and 0.105g (0.04%) of 90.3% LUPERSOL™ 101. The mixture was then vigorously dry blended together as in the procedure of Example 5.

### Comparative Example E

### Addition of Antioxidants to Polypropylene Powder

To a sample of 224.54g of polypropylene powder (grade 6501 form Himont) were added 0.23g (0.1%) of Irganox™ 1010 and 0.23g (0.1%) of Irgafos™ 168. The mixture was vigorously dry mixed as in the procedure of Example 5.

### Example 7

### Modification of Polypropylene With and Without Peroxide-Polycaprolactone Masterbatches in an Extruder

The polypropylene formulations of Examples 5 & 6 and Comparative Examples D & E were extruded using a 3/4 inch Killion laboratory single screw extruder 1/d ratio 24/l at 200-205°C. The rpm was set at 15-16, and the measured extrusion rate was about 6g/min. The results of this work are set forth in Table 4.

**Table 4**

| **Results for the Modification of Polypropylene With and Without Peroxide-Polycaprolactone Masterbatches in an Extruder** | |
|---|---|
| Polypropylene Blend Used | Melt Flow (g/10 min)¹ |
| Example 5 | 26.1 |
| Example 6 | 31.2 |
| Comp. Ex. D | 24.7 |
| Comp. Ex. E | 2.3 |

| | |
|---|---|
| ¹ ASTM Test Method 1238, condition L. | |

The results in Table 4 show that the peroxide-polycaprolactone masterbatches (Examples 5 and 6) provide increased melt flow over both of the comparative examples. Moreover, as can be seen from the results of Example 6, there is a synergistic effect to the modification of the melt flow when a hindered amine is added to the masterbatch.

## Claims

1. A masterbatch composition comprising 0.001% to 70% of an organic peroxide homogeneously dispersed in a polycaprolactone carrier.

2. The masterbatch composition of claim 1 wherein the organic peroxide is selected from the group consisting of solid peroxides which have a melting point greater than 30°C and a ten hour half life temperature greater than 45°C, and liquid peroxides which have a freezing point less than 35°C and a ten hour half life temperature greater than 75°C.

3. The masterbatch composition of claim 2 wherein the organic peroxide is selected from solid peroxides which have a melting point greater than 35°C and a ten hour half life temperature greater than 49°C, and liquid peroxides which have a freezing point less than 30°C and a ten hour half life temperature greater than 90°C.

4. The masterbatch composition of claim 1 wherein the organic peroxide is selected from a group consisting of alpha,alpha'-bis-(t-butylperoxy)diisopropylbenzene, t-butyl cumyl peroxide, dicumyl peroxide, 2,5-dimethyl-2,5-bis-(t-butylperoxy)hexane, 2,5-dimethyl-2,5-bis(t-butylperoxy) hexyne-3, di-t-butyl peroxide, benzoyl peroxide, OO-t-butyl-O-isopropyl monoperoxycarbonate, OO-t-butyl-O-(2-ethylhexyl) monoperoxycarbonate, t-butyl peroxyacetate, t-butyl peroxybenzoate, di-t-butyl diperoxyphthalate, di-t-butyl peroxyazelate, t-butylperoxy-2-ethylhexanoate, t-butyl peroxyisobutyrate, n-butyl-4,4-di-(t-butylperoxy)valerate, succinic acid peroxide, t-butylperoxy maleic acid, 1,1-di-(t-butylperoxy)cyclohexane, 1,1-di-(t-butylperoxy)-3,3,5-trimethylcyclohexane, 2,2-di-(t-butylperoxy)butane, ethyl 3,3-di-(t-butylperoxy)butyrate, t-amyl perbenzoate, t-amyl peroxy(2-ethylhexanoate), 1,1-di-(t-amylperoxy)cyclohexane, 2-(t-butylperoxy)-2-methyl-4-hydroxypentane, di-[2-(t-butylperoxy)-2-methyl-4-pentyl] carbonate, di-[2-(t-butylperoxy)-2-methyl-4-pentyl] terephthalate, di-[2-(t-butylperoxy)-2-methyl-4-pentyl] isophthalate, 4-hydroxy-2-methyl-2-pentyl peroxy-2-methylbenzoate, 4-hydroxy-2-methyl-2-pentyl peroxyacetate, di-t-amylperoxide, 2,2-di-(t-amylperoxy)propane, ethyl 3,3-di-(t-amylperoxy)butyrate, 2,5-dimethyl-2,5-di-(t-amylperoxy)hexane, and OO-t-amyl-O-(2-ethylhexyl) monoperoxycarbonate.

5. The masterbatch composition of claim 3 wherein the organic peroxide is selected from the group consisting of 2,5-dimethyl-2,5-di-(t-butylperoxy)hexane, dicumyl peroxide and 1,1-di-(t-butylperoxy)-3,3,5-trimethylcyclohexane.

6. The masterbatch composition of claim 1 wherein the polycaprolactone has a molecular weight of 500 to 100,000.

7. The masterbatch composition of claim 6 wherein the polycaprolactone has a molecular weight of 10,000 to 50,000.

8. The masterbatch composition of claim 1 wherein the organic peroxide is present in an amount of 1% to 50%.

9. The masterbatch composition of claim 1 further comprising a peroxide compatible additive selected from the group consisting of inorganic filler, antioxidant, antiozonant, antistatic agent, dye, pigment, optical brightener, heat stabilizer, light stabilizer, fire retardant, cross-linking enhancer and mixtures thereof, the additive being present in an amount which does not result in more than 25% degradation of the peroxide.

10. The masterbatch composition of claim 9 wherein any additives are present in any ratio and in any amount between 0.1% and 90%, so long as the total amount of peroxide plus additives does not exceed 95%.

11. The masterbatch composition of claim 8 further comprising a peroxide compatible additive or additives in any ratio and in any amount between 0.1% and 80%, so long as the total amount of peroxide plus additives does not exceed 85%.

12. The masterbatch composition of claim 9 wherein the additive is selected from the group consisting of tetrakis[methylene(3,5-di-t-butyl-4-hydroxy-hydrocinnamate)]methane, tris(2,4-di-t-butylphenyl)phosphite and bis-(2,2,6,6-tetramethyl-4-piperidinyl) sebacate.

13. A method of modifying a polymer which displays compatibility with polycaprolactone comprising adding to the polymer 0.1% to 50% of the masterbatch composition of claim 1.

14. The method of claim 13 wherein the polymer is selected from the group consisting of polyethylene, polypropylene, poly(vinyl chloride), poly(vinyl chloride-co-vinylidene chloride), acrylonitrile-butadiene-styrene copolymers, poly(vinyl acetate), nitrocellulose, poly(styrene-co-acrylonitrile), poly(vinyl butyral), poly(vinyl formal), poly(styrene-co-methyl methacrylate), cellulose tridecanoate, poly(ethylene oxide), polycaprolactam, poly(ethyl vinyl ether-co-maleic anhydride), polybutadiene, polyisobutylene, natural gum rubber, poly(styrene-co-butadiene), poly(ethylene-co-propylene) terpolymer, butyl rubber gum, styrene unsaturated polyester, poly(ethyl vinyl ether), epoxy resin and phenol formaldehyde polymers.

15. The method of claim 13 wherein the polymer is polypropylene.

16. A process for preparing the masterbatch composition of claim 1 comprising mixing 0.001% to 70% of an organic peroxide with a polycaprolactone carrier.

17. The process of claim 16 further comprising adding a peroxide compatible additive selected from the group consisting of inorganic filler, antioxidant, antiozonant, antistatic agent, dye, pigment, optical brightener, heat stabilizer, light stabilizer, fire retardant, cross-linking enhancer and mixtures thereof, the additive being present in an amount which does not result in more than 25% degradation of the peroxide.

## Patentansprüche

1. Eine Stammischungszusammensetzung, umfassend 0,001% bis 70% eines organischen Peroxids, das homogen in einem Polycaprolactonträger dispergiert ist.

2. Die Stammischungszusammensetzung nach Anspruch 1, worin das organische Peroxid ausgewählt ist aus der Gruppe, bestehend aus festen Peroxiden, die einen Schmelzpunkt größer 30 °C und eine Zehn-Stunden-Halbwertszeittemperatur größer 45°C haben, und flüssigen Peroxiden, die einen Gefrierpunkt kleiner 35°C und eine Zehn-Stunden-Halbwertszeittemperatur größer 75°C haben.

3. Die Stammischungszusammensetzung nach Anspruch 2, worin das organische Peroxid ausgewählt ist aus festen Peroxiden, die einen Schmelzpunkt größer 35°C und eine Zehn-Stunden-Halbwertszeittemperatur größer 49°C haben, und flüssigen Peroxiden, die einen Gefrierpunkt kleiner 30°C und eine Zehn-Stunden-Halbwertszeittemperatur größer 90°C haben.

4. Die Stammischungszusammensetzung nach Anspruch 1, worin das organische Peroxid ausgewählt ist aus einer Gruppe, bestehend aus alpha,alpha'-Bis-(t-butylperoxy)diisopropylbenzol, t-Butylcumylperoxid, Dicumylperoxid, 2,5-Dimethyl-2,5-bis-(t-butylperoxy)hexan, 2,5-Dimethyl-2,5-bis-(t-butylperoxy)hex-3-in, Di-t-butylperoxid, Benzoylperoxid, OO-t-Butyl-O-isopropylmonoperoxycarbonat, OO-t-Butyl-O-(2-ethylhexyl)monoperoxycarbonat, t-Butylperoxyacetat, t-Butylperoxybenzoat, Di-t-butyldiperoxyphthalat, Di-t-butylperoxyazelat, t-Butylperoxy-2-ethylhexanoat, t-Butylperoxyisobutyrat, n-Butyl-4,4-di-(t-butylperoxy)valerat, Succinsäureperoxid, t-Butylperoxymaleinsäure, 1,1-Di-(t-butylperoxy)cyclohexan, 1,1-Di-(t-butylperoxy)-3,3,5-trimethylcyclohexan, 2,2-Di-(t-butylperoxy)butan, Ethyl-3,3-di-(t-butylperoxy)butyrat, t-Amylperbenzoat, t-Amylperoxy(2-ethylhexanoat), 1,1-Di-(t-amylperoxy)cyclohexan, 2-(t-Butylperoxy)-2-methyl-4-hydroxypentan, Di-[2-(t-butylperoxy)-2-methyl-4-pentyl]carbonat, Di-[2-(t-butylperoxy)-2-methyl-4-pentyl]terephthalat, Di-[2-(t-butylperoxy)-2-methyl-4-pentyl]isophthalat, 4-Hydroxy-2-methyl-2-pentylperoxy-2-methylbenzoat, 4-Hydroxy-2-methyl-2-pentylperoxyacetat, Di-t-amylperoxid, 2,2-Di-(t-amylperoxy)propan, Ethyl-3,3-di-(t-amylperoxy)butyrat, 2,5-Dimethyl-2,5-di-(t-amylperoxy)hexan und OO-t-Amyl-O-(2-ethylhexyl)monoperoxycarbonat.

5. Die Stammischungszusammensetzung nach Anspruch 3, worin das organische Peroxid ausgewählt ist aus der Gruppe, bestehend aus 2,5-Dimethyl-2,5-di-(t-butylperoxy)hexan, Dicumylperoxid und 1,1-Di-(t-butylperoxy)-3,3,5-trimethylcyclohexan.

6. Die Stammischungszusammensetzung nach Anspruch 1, worin das Polycaprolacton ein Molekulargewicht von 500 bis 100 000 hat.

7. Die Stammischungszusammensetzung nach Anspruch 6, worin das Polycaprolacton ein Molekulargewicht von 10 000 bis 50 000 hat.

8. Die Stammmischungszusammensetzung nach Anspruch 1, worin das organische Peroxid in einer Menge von 1% bis 50% vorhanden ist.

9. Die Stammischungszusammensetzung nach Anspruch 1, ferner umfassend einen peroxidverträglichen Zusatz, ausgewählt aus der Gruppe, bestehend aus anorganischem Füllstoff, Antioxidans, Antiozonans, Antistatikum, Farbstoff, Pigment, optischem Aufheller, Hitzestabilisator, Lichtstabilisator, Flammschutzmittel, Vernetzungsverstärker und Mischungen davon, wobei der Zusatz in einer Menge vorhanden ist, die nicht zu einem Peroxidabbau von mehr als 25% führt.

10. Die Stammischungszusammensetzung nach Anspruch 9, worin beliebige Zusätze in einem beliebigen Verhältnis und in einer beliebigen Menge zwischen 0,1% und 90% vorhanden sind, sofern die Gesamtmenge aus Peroxid und Zusätzen 95% nicht übersteigt.

11. Die Stammischungszusammensetzung nach Anspruch 8, ferner umfassend einen peroxidverträglichen Zusatz oder peroxidverträgliche Zusätze in einem beliebigen Verhältnis und in einer beliebigen Menge zwischen 0,1% und 80%, sofern die Gesamtmenge aus Peroxid und Zusätzen 85% nicht übersteigt.

12. Die Stammischungszusammensetzung nach Anspruch 9, worin der Zusatz ausgewählt ist aus der Gruppe, bestehend aus Tetrakis[methylen(3,5-di-t-butyl-4-hydroxy-hydrocinnamat)]methan, Tris(2,4-di-t-butylphenyl)phosphit und Bis-(2,2,6,6-tetramethyl-4-piperidinyl)sebacat.

13. Ein Verfahren zur Modifizierung eines Polymers, das mit Polycaprolacton kompatibel ist, das die Zugabe von 0,1% bis 50% der Stammischungszusammensetzung nach Anspruch 1 zu dem Polymer umfaßt.

14. Das Verfahren nach Anspruch 13, worin das Polymer ausgewählt ist aus der Gruppe, bestehend aus Polyethylen, Polypropylen, Poly(vinylchlorid), Poly(vinylchlorid-co-vinylidenchlorid), Acrylnitrilbutadienstyrolcopolymeren, Poly(vinylacetat), Nitrocellulose, Poly(styrol-co-acrylnitril), Poly(vinylbutyral), Poly(vinylformal), Poly(styrol-co-methylmethacrylat), Cellulosetridecanoat, Poly(ethylenoxid), Polycaprolactam, Poly(ethylvinylether-co-maleinsäureanhydrid), Polybutadien, Polyisobutylen, natürlichem Gummikautschuk, Poly(styrol-co-butadien), Poly(ethylen-co-propylen)terpolymer, Butylkautschukgummi, Styrol-ungesättigt.-Polyester, Poly(ethylvinylether), Epoxyharz- und Phenolformaldehydpolymeren.

15. Das Verfahren nach Anspruch 13, worin das Polymer Polypropylen ist.

16. Ein Verfahren zur Herstellung der Stammischungszusammensetzung nach Anspruch 1, umfassend Mischen von 0,001% bis 70% eines organischen Peroxids mit einem Polycaprolactonträger.

17. Das Verfahren nach Anspruch 16, ferner umfassend Hinzufügen eines peroxidverträglichen Zusatzes, ausgewählt aus der Gruppe, bestehend aus anorganischem Füllstoff, Antioxidans, Antiozonans, Antistatikum, Farbstoff, Pigment, optischem Aufheller, Hitzestabilisator, Lichtstabilisator, Flammschutzmittel, Vernetzungsverstärker und Mischungen davon, wobei der Zusatz in einer Menge vorhanden ist, die nicht zu einem Peroxidabbau von mehr als 25% führt.

## Revendications

1. Composition de mélange-maître comprenant 0,001 % à 70 % d'un peroxyde organique dispersé de manière homogène dans un véhicule consistant en une polycaprolactone.

2. Composition de mélange-maître suivant la revendication 1, dans laquelle le peroxyde organique est choisi dans le groupe consistant en peroxydes solides qui possèdent un point de fusion supérieur à 30°C et une température de demi-vie de 10 heures supérieure à 45°C, et peroxydes liquides qui possèdent un point de congélation inférieur à 35°C et une température de demi-vie de dix heures supérieure à 75°C.

3. Composition de mélange-maître suivant la revendication 2, dans laquelle le peroxyde organique est choisi entre des peroxydes solides qui possèdent un point de fusion supérieur à 35°C et une température de demi-vie de 10 heures supérieure à 49°C, et des peroxydes liquides qui possèdent un point de congélation inférieur à 30°C et une température de demi-vie de 10 heures supérieure à 90°C.

4. Composition de mélange-maître suivant la revendication 1, dans laquelle le peroxyde organique est choisi dans le groupe consistant en alpha, alpha' -bis- (tertiobutylperoxy)diisopropylbenzène, peroxyde de tertiobutyle et de cumyle, peroxyde de dicumyle, 2,5-diméthyl-2,5-bis-(tertiobutylperoxy)hexane, 2,5-diméthyl-2,5-bis-(tertiobutylperoxy)hexyne-3, peroxyde de di-tertiobutyle, peroxyde de benzoyle, OO-tertiobutyl-O-isopropyl-monoperoxycarbonate, OO-tertiobutyl-O- (2-éthylhexyl)-monoperoxycarbonate,peroxyacétate de tertiobutyle, peroxybenzoate de tertiobutyle, diperoxyphtalate de di-tertiobutyle, peroxyazélate de di-tertiobutyle, peroxy-2-éthylhexanoate de tertiobutyle, peroxyisobutyrate de tertiobutyle, 4,4-di-(tertiobutylperoxy)valérate de n-butyle, peroxyde d'acide succinique, acide tertiobutylperoxymaléique, 1,1-di-(tertiobutylperoxy)-cyclohexane, 1-1-di-(tertiobutylperoxy)-3,3,5-triméthylcyclohexane, 2,2-di-(tertiobutylperoxy)butane, 3,3-di-(tertio-butylperoxy)butyrate d'éthyle, perbenzoate de tertio-amyle, peroxy(2-éthylhexanoate) de tertio-amyle, 1,1-di-(tertio-amylperoxy)cyclohexane, 2-(tertiobutylperoxy)2-méthyl-4-hydroxypentane, carbonate de di-[2-(tertiobutylperoxy)-2-méthyl-4-pentyle], téréphtalate de di-[2-(tertiobutylperoxy)-2-méthyl-4-pentyle], isophtalate de di-[2-(tertiobutylperoxy)-2-méthyl-4-pentyle], peroxy-2-méthylbenzoate de 4-hydroxy-2-méthyl-2-pentyle, peroxyacétate de 4-hydroxy-2-méthyl-2-pentyle, peroxyde de di-tertio-amyle, 2,2-di-(tertio-amylperoxy)propane, 3,3-di-(tertio-amylperoxy)-butyrate d'éthyle, 2,5-diméthyl-2,5-di-(tertio-amylperoxy)-hexane, et monoperoxycarbonate de OO-tertio-amyl-O-(2-éthylhexyle).

5. Composition de mélange-maître suivant la revendication 3, dans laquelle le peroxyde organique est choisi dans le groupe consistant en 2,5-diméthyl-2,5-di-(tertiobutylperoxy)hexane, peroxyde de dicumyle et 1,1-di-(tertiobutylperoxy)-3,3,5-triméthylcyclohexane.

6. Composition de mélange-maître suivant la revendication 1, dans laquelle la polycaprolactone possède un poids moléculaire de 500 à 100 000.

7. Composition de mélange-maître suivant la revendication 6, dans laquelle la polycaprolactone possède un poids moléculaire de 10 000 à 50 000.

8. Composition de mélange-maître suivant la revendication 1, dans laquelle le peroxyde organique est présent en une quantité de 1 % à 50 %.

9. Composition de mélange-maître suivant la revendication 1, comprenant en outre un additif compatible avec les peroxydes, choisi dans le groupe consistant en une charge inorganique, un antioxydant, un antiozonant, un agent antistatique, un colorant, un pigment, un azurant optique, un stabilisant thermique, un photostabilisant, un retardateur de flamme, un activateur de réticulation et leurs mélanges, l'additif étant présent en une quantité n'ayant pas pour résultat une dégradation de plus de 25 % du peroxyde.

10. Composition de mélange-maître suivant la revendication 9, dans laquelle tous les additifs sont présents en n'importe quel rapport et en n'importe quelle quantité entre 0,1 % et 90 %_{,} du moment que la quantité totale du peroxyde et des additifs n'excède pas 95 %.

11. Composition de mélange-maître suivant la revendication 8, comprenant en outre un ou plusieurs additifs compatibles avec des peroxydes, en n'importe quel rapport et en n'importe quelle quantité entre 0,1 % et 80 %_{,} du moment que la quantité totale du peroxyde et des additifs n'excède pas 85 %.

12. Composition de mélange-maître suivant la revendication 9, dans laquelle l'additif est choisi dans le groupe consistant en tétrakis [méthylène (3,5-di-tertiobutyl-4-hydroxy-hydrocinnamate)]méthane, phosphite de tris(2,4-di-tertiobutylphényle) et sébacate de bis-(2,2,6,6-tétraméthyl-4-pipéridinyle).

13. Procédé de modification d'un polymère qui présente une compatibilité avec une polycaprolactone, comprenant l'addition au polymère de 0,1 % à 50 % de la composition de mélange-maître suivant la revendication 1.

14. Procédé suivant la revendication 13, dans lequel le polymère est choisi dans le groupe consistant en un polyéthylène, un polypropylène, un poly(chlorure de vinyle), un poly(chlorure de vinyle-co-chlorure de vinylidène), des coplymères acrylonitrile-butadiène-styrène, un poly(acétate de vinyle), la nitrocellulose, un poly(styrène-co-acrylonitrile), un poly(vinylbutyral), un poly(vinylformal), un poly(styrène-co-méthacrylate de méthyle), le tridécanoate de cellulose, un poly(oxyde d'éthylène), un polycaprolactame, un poly(éther d'éthyle et de vinyle-co-anhydride maléique), un polybutadiène, un polyisobutylène, un caoutchouc consistant en une gomme naturelle, un poly(styrène-co-butadiène), un terpolymère poly(éthylène-co-propylène), une gomme de caoutchouc butyle, un polyester insaturé renfermant du styrène, un poly(éther d'éthyle et de vinyle), une résine époxy et des polymères phénol-formaldéhyde.

15. Procédé suivant la revendication 13, dans lequel le polymère est le polypropylène.

16. Procédé de préparation de la composition de mélange-maître suivant la revendication 1, comprenant le mélange d'une quantité de 0,001 % à 70 % d'un peroxyde organique avec un véhicule consistant en une polycaprolactone.

17. Procédé suivant la revendication 16, comprenant en outre l'addition d'un additif compatible avec des peroxydes, choisi dans le groupe consistant en une charge inorganique , un antioxydant, un antiozonant, un agent antistatique, un colorant, un pigment, un azurant optique, un stabilisant thermique, un photostabilisant, un retardateur de flamme, un activateur de réticulation et leurs mélanges, l'additif étant présent en une quantité n'ayant par pour résultat une dégradation de plus de 25 % du peroxyde.
